# EUROPEAN PATENT SPECIFICATION

(11) **EP 2 275 234 B1**
(45) Date of publication and mention of the grant of the patent: **16.02.2022**
(21) Application number: 09729781.6
(22) Date of filing: 13.03.2009
(51) Int. Cl.: B25J 9/06, B25J 9/04

(54) **MULTI-JOINT ROBOT AND SYSTEM**
MEHRFACHVERBINDUNGSROBOTER UND SYSTEM
SYSTÈME ET ROBOT À PLUSIEURS ARTICULATIONS

(30) Priority: 07.04.2008 JP 2008099659
(43) Date of publication of application: 19.01.2011
(73) Proprietor: Kabushiki Kaisha Yaskawa Denki, Kitakyushu-shi, Fukuoka 806-0004 (JP)
(72) Inventor: ITO, Masato, Kitakyushu-Shi 806-0004 Fukuoka (JP); OKAHISA, Manabu, Kitakyushu-Shi 806-0004 Fukuoka (JP)
(74) Representative: Fédit-Loriot
(86) International application number: PCT/JP2009/054887
(87) International publication number: WO 2009/125648

(56) References cited:
- WO-A1-2007/037131
- JP-A- 3 202 288
- JP-A- 5 220 681
- JP-A- 8 323 662
- JP-A- 11 216 692
- JP-U- 7 000 680
- US-B1- 6 178 842

## Description

### Technical Field

The present invention relates to a manipulator and a system for transportation or assembly of goods, or spot welding in automobile manufacturing.

### Background Art

A conventional manipulator includes a plurality of arm bodies provided in series; joints rotatably connecting adjacent two of the arm bodies to each other, the joint having rotation axes, the rotation axis of each joints has an inclination of 90 degrees to the rotation axis of the adjacent joint; and at least a linear body arranged in the joints coaxially with the rotation axes, the joints being formed of servo-motors and reduction gear mechanisms (for example, see Patent Document 1).

[Patent Document 1] International Publication No. WO/2007/037131

### Disclosure of Invention

### Problems to be Solved by the Invention

In many cases, a robot manipulator that assembles parts for a product or transports goods is used in a large-scale line system, in which multiple robots are arranged and work in a factory, or used in a cell production system, in which multiple robots are separately arranged and work. The robot manipulator used for such a purpose is desired to have a small footprint and a large work envelope. Simply reducing the size of the footprint only reduces the size of the robot manipulator, but does not increase the size of the work envelope. Thus, a robot manipulator, whose work envelope is increased in size but whose footprint is not changed, is desired.

Also, if a robot manipulator is installed in a compact space, a robot may interfere with another robot. Such robots may frequently have difficulty in working in a free posture. Thus, the robot manipulator is desired to have an axis arrangement that provides a posture with a high degree of freedom. In particular, since robots tend to be arranged with high density, a rack-mounted robot using an upper space and a stationary robot are likely combined for welding.

A conventional robot manipulator has movable ranges symmetric with one another about a first axis. For example, if the robot manipulator works on a workpiece from the upper side, the robot manipulator can move closer to the workpiece as the movable range toward the lower side is larger.

However, the movable range of the conventional robot manipulator is not sufficient because the motion range when the robot manipulator moves around the workpiece (the movement being unique to the robot manipulator) is narrow. The robot manipulator has to be arranged at a certain distance from the workpiece.

US 6178842 B1 discloses the industrial robot being capable of securing a wide operating range including that in the near front side of robot.

JP 5220681 A discloses a robot which is small in size and light in weight and excellent in workability without causing a blind spot in the operation range.

The present invention is made in light of the situations, and an object of the present invention is to provide a robot manipulator capable of having a large main work envelope and holding a posture of the robot manipulator with a high degree of freedom while an installation position of the manipulator is not changed.

### Means for Solving the Problems

The present invention provides a robot manipulator including a plurality of arm bodies provided in series and a plurality of joints comprising joint shafts rotatably connecting adjacent two of the arm bodies to each other comprising: a first arm body that rotates around a first joint shaft axis that is arranged vertically within a horizontal plane; a second arm body that rotates around a second joint shaft axis that is arranged orthogonally to the first joint shaft axis; a third arm body that rotates around a third joint shaft axis that is arranged orthogonally to the second joint shaft; a fourth arm body that rotates around a fourth joint shaft axis that is arranged orthogonally to the third joint shaft axis; a fifth arm body that rotates around a fifth joint shaft axis that is arranged orthogonally to the fourth joint shaft axis; and a sixth arm body that rotates around a sixth joint shaft axis that is arranged orthogonally to the fifth joint shaft axis, wherein the sixth arm body includes a seventh joint shaft with a seventh joint shaft axis that is arranged orthogonally to the sixth joint shaft axis, characterized in that when the robot manipulator extends vertically with respect to the first vertical shaft axis, the third joint shaft axis, fifth joint shaft axis, and a seventh joint shaft axis are offset from the first vertical shaft axis, and the third joint shaft axis, fifth joint shaft axis, and seventh joint shaft axis are coaxial in vertical direction.

Using the robot manipulator, the robot manipulator is arranged in a space near a good.

The robot manipulator may be preferably mounted on a rack and have a motion range extending from an upper position to a position below a base of the robot manipulator, so that the robot manipulator is arranged while a space is efficiently used.

Also, although this is an embodiment that is not covered by the claimed invention, if a plurality of robots work cooperatively, a robot manipulator may be preferably installed on a floor at a position between a six-axis robot and a good, so that the six-axis robot works on an upper section of the good and the robot manipulator works on a lower section of the good.

### Advantages

With the present invention, the movable range of the robot manipulator can be increased in size while the installation area is not changed.

In addition, the space for the arrangement of the robot manipulator can be efficiently used three dimensionally. The robot manipulator can work at a position near a good. Although this is an embodiment that is not covered by the claimed invention, a plurality of robot manipulators can be installed in a narrow space, and thus, the plurality of robots can work cooperatively.

### Brief Description of Drawings

[Fig. 1] Fig. 1 is a side view of a robot manipulator.
[Fig. 2] Fig. 2 is a front view of the robot manipulator.
[Fig. 3] Fig. 3 is a side view showing a motion range of the robot manipulator.
[Fig. 4] Fig. 4 is a rack-mounted robot manipulator.
[Fig. 5] Fig. 5 is a working diagram of a plurality of robot manipulators (An embodiment not covered by the claimed invention).

### Reference Numerals

- C1: first arm body
- C2: second arm body
- C3: third arm body
- C4: fourth arm body
- C5: fifth arm body
- C6: sixth arm body
- J1: first joint shaft
- J2: second joint shaft
- J3: third joint shaft
- J4: fourth joint shaft
- J5: fifth joint shaft
- J6: sixth joint shaft
- J7: seventh joint shaft
- 1: robot manipulator
- 2: spot-welding gun
- 3: workpiece
- 41: first six-axis robot
- 42: second six-axis robot
- 43: third six-axis robot
- 44: first robot manipulator
- 45: second robot manipulator
- 10: motion range

### Best Mode for Carrying Out the Invention

An embodiment of the present invention will be described below with reference to the attached drawings.

### First Embodiment

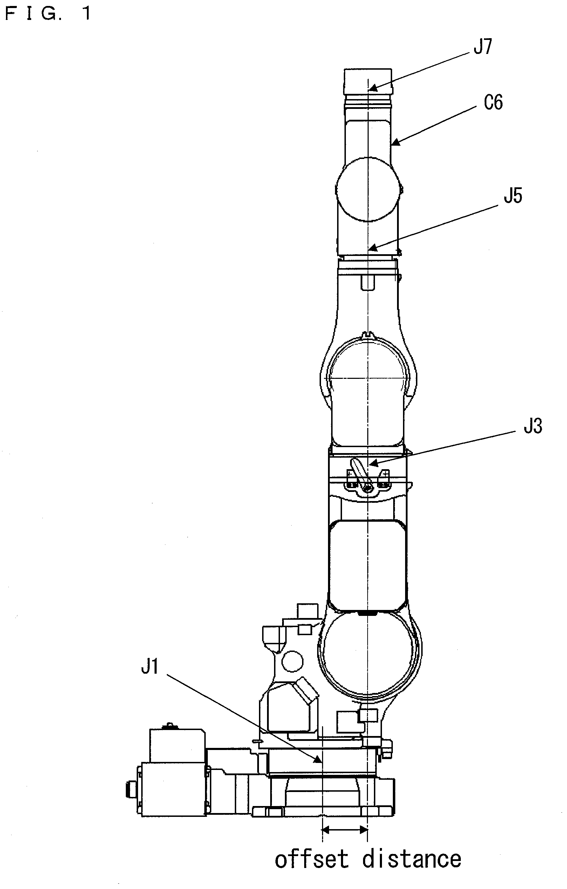

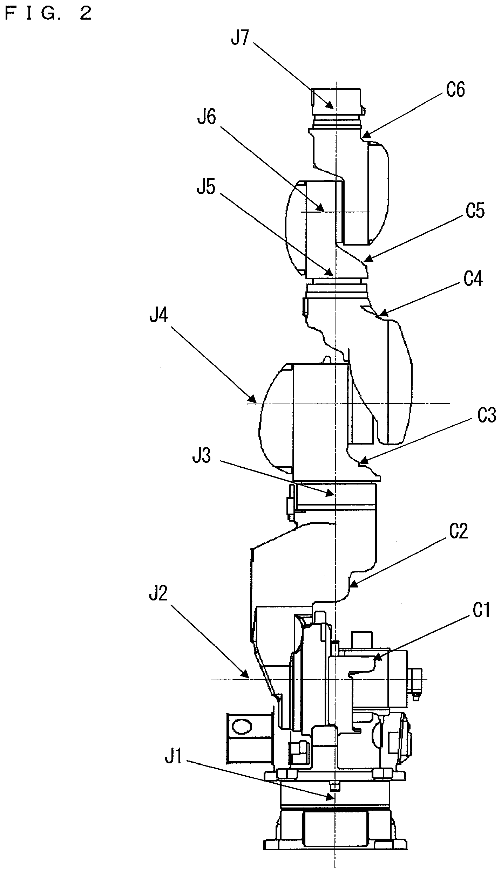

Fig. 1 is a side view of a robot manipulator according to an embodiment of the present invention. Fig. 2 is a front view of the robot manipulator. A free-end arm body C6 includes a joint shaft J7. For example, a handling device provided with a force sensor, or a spot-welding gun device is attached to the joint shaft J7.

A first arm body C1 rotates around a first joint shaft J1 that is vertically arranged within a horizontal plane. A second arm body C2 rotates around a second joint shaft J2 that is arranged orthogonally to the first joint shaft J1. A third arm body C3 rotates around a third joint shaft J3 that is arranged orthogonally to the second joint shaft J2. A fourth arm body C4 rotates around a fourth joint shaft J4 that is arranged orthogonally to the third joint shaft J3. A fifth arm body C5 rotates around a fifth joint shaft J5 that is arranged orthogonally to the fourth joint shaft J4. A sixth arm body C6 rotates around a sixth joint shaft J6 that is arranged orthogonally to the fifth joint shaft J5. The rotation centers of the third joint shaft J3, fifth joint shaft J5, and seventh joint shaft J7 are offset from the first joint shaft J1 toward the right side in the drawing.

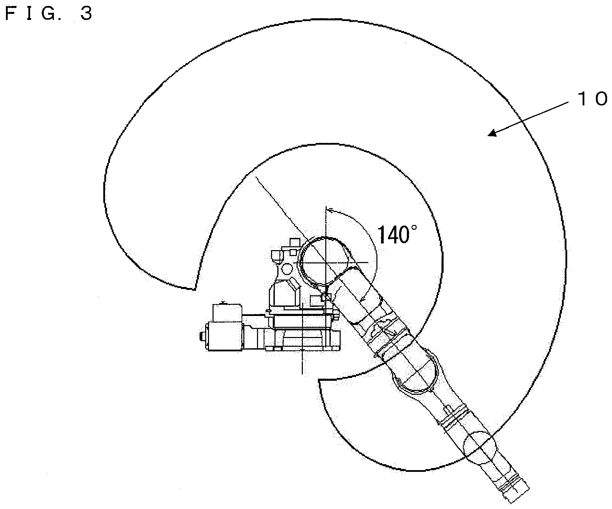

With this arrangement, the motion range of the robot manipulator extends toward the lower right side in the drawing, like a motion range 10 of the robot manipulator shown in Fig. 3. Thus, an arm distal end of a robot can reach the inside of the robot.

In addition, since the rotation centers of the third, fifth, and seventh joint shafts are arranged at a certain distance from the first joint shaft, an interference region of arms is reduced in size, resulting in a frequently used motion range located in front of a robot expands.

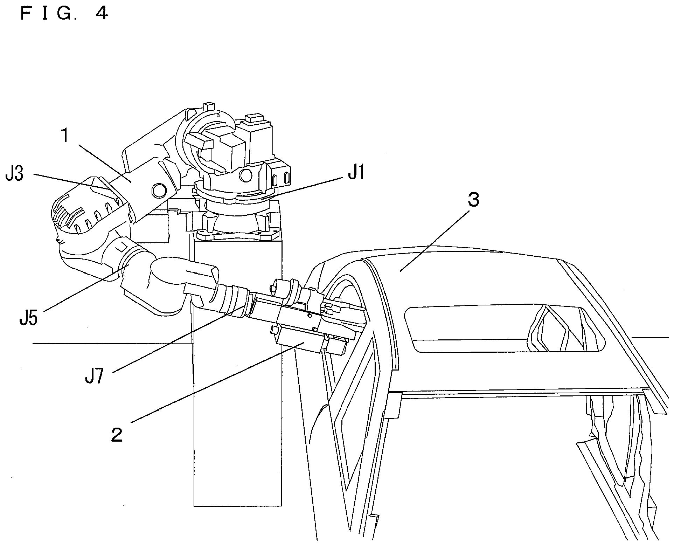

Next, a case where a spot-welding gun is attached to an arm distal end will be described with reference to Fig. 4. A spot-welding gun 2 is attached to a distal end of a rack-mounted robot manipulator 1. The spot-welding gun 2 performs welding at a certain position of a workpiece 3. The robot manipulator 1 and the workpiece 3 are arranged such that the robot manipulator 1 is arranged in an upper area on a side near the workpiece 3 without interference. That is, the robot manipulator 1 is mounted on a rack. The workpiece 3 is moved by transporting means (not shown). The robot manipulator 1 approaches to the workpiece 3 from the upper side so that the spot-welding gun 2, which is attached to the distal end of the robot manipulator 1, performs welding at a certain position of the workpiece 3. The spot-welding gun 2 performs welding at a position near a base of the robot manipulator 1. For the welding, the rotation centers of the joint shafts J3, J5, and J7 are offset from the joint shaft J1. The spot-welding gun 2 is guided to the workpiece 3 that is arranged below the robot manipulator 1. The welding is performed within the movable range of the robot manipulator 1 that extends toward the lower side. Also, if the joint shaft J3 is rotated by a certain angle, the robot manipulator 1 can perform welding for the workpiece 3 that is arranged near the robot manipulator 1, while interference of the robot manipulator 1 is prevented from occurring.

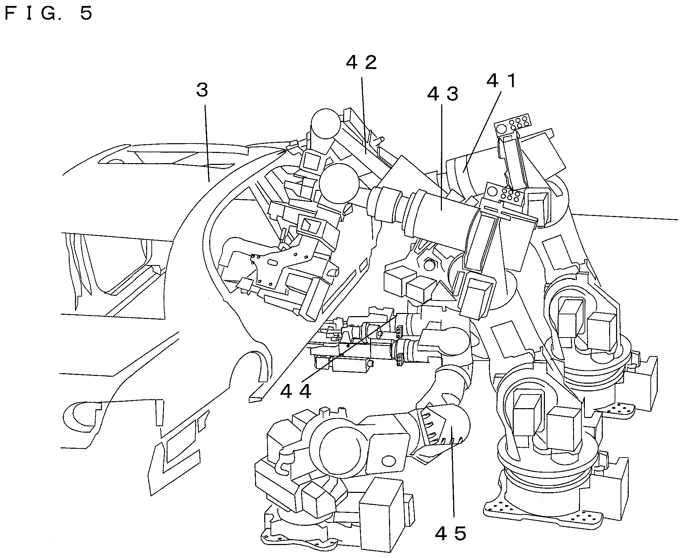

Next, an example not covered by the claimed invention, in which a plurality of robot manipulators perform welding for a workpiece, will be described. In particular, the example, in which five robots are used to perform spot welding for a workpiece, will be described with reference to Fig. 5. Three six-axis robots 41, 42, and 43 perform welding for an upper section of a workpiece 3. Two robot manipulators 44 and 45 perform welding for a lower section of the workpiece 3. The arrangement of the robots is as follows. The first to third six-axis robots 41, 42, and 43 are arranged substantially in parallel to a transportation direction (toward the deep side in the drawing) of transporting means (not shown) for the workpiece 3. The first and second robot manipulators 44 and 45 are arranged between the workpiece 3 and the first to third six-axis robots 41, 42, and 43. Since the first to third six-axis robots 41, 42, and 43 performs welding for the upper section of the workpiece 3, a space below the first to third six-axis robots 41, 42, and 43 is an unused space. The first and second robot manipulators 44 and 45 are arranged in this space, so as to provide high-density arrangement of the robots.

Further, by rotating the joint shaft J3 by a certain angle, the first and second robot manipulators 44 and 45 can perform welding for the workpiece 3 arranged near the first and second robot manipulators 44 and 45 while interference of the first and second robot manipulators 44 and 45 is prevented from occurring.

## Claims

1. A robot manipulator including a plurality of arm bodies provided in series and a plurality of joints comprising joint shafts rotatably connecting adjacent two of the arm bodies to each other comprising: a first arm body (C1) that rotates around a first joint shaft axis (J1) that is arranged vertically within a horizontal plane; a second arm body (C2) that rotates around a second joint shaft axis (J2) that is arranged orthogonally to the first joint shaft axis (J1); a third arm body (C3) that rotates around a third joint shaft axis (J3) that is arranged orthogonally to the second joint shaft (J2); a fourth arm body (C4) that rotates around a fourth joint shaft axis (J4) that is arranged orthogonally to the third joint shaft axis (J3); a fifth arm body (C5) that rotates around a fifth joint shaft axis (J5) that is arranged orthogonally to the fourth joint shaft axis (J4); and a sixth arm body (C6) that rotates around a sixth joint shaft axis (J6) that is arranged orthogonally to the fifth joint shaft axis (J5), wherein the sixth arm body (C6) includes a seventh joint shaft with a seventh joint shaft axis (J7) that is arranged orthogonally to the sixth joint shaft axis (J6),
**characterized in that**
when the robot manipulator extends vertically with respect to the first vertical shaft axis (J1), the third joint shaft axis (J3), fifth joint shaft axis (J5), and a seventh joint shaft axis (J7) are offset from the first vertical shaft axis (J1), and the third joint shaft axis (J3), fifth joint shaft axis (J5), and seventh joint shaft axis (J7) are coaxial in vertical direction.

2. The robot manipulator according to claim 1, wherein a joint shaft at a distal end of the robot manipulator has a motion range extending to a position below a base of the robot manipulator, the first joint shaft axis (J1) being housed within the base.

## Patentansprüche

1. Robotermanipulator mit einer Mehrzahl von Armkörpern, die in Reihe bereitgestellt sind, und einer Mehrzahl von Gelenken, die Gelenkwellen umfassen, die zwei benachbarte bzw. angrenzende der Armkörper drehbar miteinander verbinden, umfassend: einen ersten Armkörper (C1), der sich um eine erste Gelenkwellenachse (J1) dreht, die vertikal innerhalb einer horizontalen Ebene angeordnet ist; einen zweiten Armkörper (C2), der sich um eine zweite Gelenkwellenachse (J2) dreht, die orthogonal zu der ersten Gelenkwellenachse (J1) angeordnet ist; einen dritten Armkörper (C3), der sich um eine dritte Gelenkwellenachse (J3) dreht, die orthogonal zu der zweiten Gelenkwellenachse (J2) angeordnet ist; einen vierten Armkörper (C4), der sich um eine vierte Gelenkwellenachse (J4) dreht, die orthogonal zu der dritten Gelenkwellenachse (J3) angeordnet ist; einen fünften Armkörper (C5), der sich um eine fünfte Gelenkwellenachse (J5) dreht, die orthogonal zu der vierten Gelenkwellenachse (J4) angeordnet ist; und einen sechsten Armkörper (C6), der sich um eine sechste Gelenkwellenachse (J6) dreht, die orthogonal zu der fünften Gelenkwellenachse (J5) angeordnet ist, wobei der sechste Armkörper (C6) eine siebte Gelenkwelle mit einer siebten Gelenkwellenachse (J7) enthält, die orthogonal zu der sechsten Gelenkwellenachse (J6) angeordnet ist,
**dadurch gekennzeichnet, dass**
wenn sich der Robotermanipulator vertikal in Bezug auf die erste vertikale Wellenachse (J1) erstreckt, die dritte Gelenkwellenachse (J3), die fünfte Gelenkwellenachse (J5) und eine siebte Gelenkwellenachse (J7) von der ersten vertikalen Wellenachse (J1) versetzt sind und die dritte Gelenkwellenachse (J3), die fünfte Gelenkwellenachse (J5) und die siebte Gelenkwellenachse (J7) in vertikaler Richtung koaxial sind.

2. Robotermanipulator nach Anspruch 1, wobei eine Gelenkwelle an einem distalen Ende des Robotermanipulators einen Bewegungsbereich aufweist, der sich zu einer Position unterhalb einer Basis des Robotermanipulators erstreckt, wobei die erste Gelenkwellenachse (J1) innerhalb der Basis untergebracht ist.

## Revendications

1. Robot manipulateur comprenant une pluralité de corps de bras prévus en série et une pluralité d'articulations comprenant des arbres d'articulation reliant de manière rotative deux corps de bras adjacents l'un à l'autre, comprenant : un premier corps de bras (C1) qui tourne autour d'un premier axe d'arbre d'articulation (J1) qui est agencé verticalement dans un plan horizontal ; un deuxième corps de bras (C2) qui tourne autour d'un deuxième axe d'arbre d'articulation (J2) qui est agencé orthogonalement par rapport au premier axe d'arbre d'articulation (J1) ; un troisième corps de bras (C3) qui tourne autour d'un troisième axe d'arbre d'articulation (J3) qui est agencé orthogonalement par rapport au deuxième axe d'articulation (J2) ; un quatrième corps de bras (C4) qui tourne autour d'un quatrième axe d'arbre d'articulation (J4) qui est agencé orthogonalement par rapport au troisième axe d'arbre d'articulation (J3) ; un cinquième corps de bras (C5) qui tourne autour d'un cinquième axe d'arbre d'articulation (J5) qui est agencé orthogonalement par rapport au quatrième axe d'arbre d'articulation (J4) ; et un sixième corps de bras (C6) qui tourne autour d'un sixième axe d'arbre d'articulation (J6) qui est agencé orthogonalement par rapport au cinquième axe d'arbre d'articulation (J5), dans lequel le sixième corps de bras (C6) comporte un septième arbre d'articulation avec un septième axe d'arbre d'articulation (J7) qui est agencé orthogonalement par rapport au sixième axe d'arbre d'articulation (J6),
**caractérisé en ce que**
lorsque le robot manipulateur s'étend verticalement par rapport au premier axe d'arbre d'articulation vertical (J1), le troisième axe d'arbre d'articulation (J3), le cinquième axe d'arbre d'articulation (J5) et un septième axe d'arbre d'articulation (J7) sont excentrés par rapport au premier axe d'arbre d'articulation vertical (J1), et le troisième axe d'arbre d'articulation (J3), le cinquième axe d'arbre d'articulation (J5) et le septième axe d'arbre d'articulation (J7) sont coaxiaux dans la direction verticale.

2. Robot manipulateur selon la revendication 1, dans lequel un arbre d'articulation, au niveau d'une extrémité distale du robot manipulateur, présente une plage de mouvement s'étendant jusqu'à une position en dessous d'une base du robot manipulateur, le premier axe d'arbre d'articulation (J1) étant agencé à l'intérieur de la base.
